# EUROPÄISCHE PATENTSCHRIFT

(11) **EP 0 697 275 B1**
(45) Veröffentlichungstag und Bekanntmachung des Hinweises auf die Patenterteilung: **12.05.1999**
(21) Anmeldenummer: 95112675.4
(22) Anmeldetag: 11.08.1995
(51) Int. Cl.: B29C 70/08, B29C 70/34, B32B 5/02

(54) **Biegesteifer Faserverbundwerkstoff**
Fiber reinforced material having high bending stiffness
Matériau composite renforcé par des fibres, rigide en flexion

(30) Priorität: 20.08.1994 DE 4429599
(43) Veröffentlichungstag der Anmeldung: 21.02.1996
(73) Patentinhaber: BASF AKTIENGESELLSCHAFT, 67056 Ludwigshafen (DE)
(72) Erfinder: Schlarb, Alois, Dr., D-67146 Deidesheim (DE); Ittemann, Peter, Dr., D-68623 Lampertheim (DE); Dittmar, Harri, D-67271 Battenberg (DE); Wald, Hans Hubert, D-67071 Ludwigshafen (DE)

(56) Entgegenhaltungen:
- EP-A- 0 133 119
- EP-A- 0 323 571
- EP-A- 0 507 322
- FR-A- 1 411 011
- FR-A- 2 511 637
- GB-A- 1 370 787
- US-A- 2 960 424
- PATENT ABSTRACTS OF JAPAN vol. 18 no. 616 (M-1710) ,24.November 1994 & JP-A-06 238659 (KAWASAKI STEEL CORP.) 30.August 1994,

## Beschreibung

Die Erfindung betrifft einen biegesteifen, flächigen Verbundwerkstoff mit einer Dicke von 1,2 bis 3 mm und einem Flächengewicht von 1000 bis 3200 g·m⁻², bestehend aus einer Thermoplastmatrix und Verstärkungsfasern.

Flächige Verbundwerkstoffe aus einer Thermoplastmatrix und darin eingelagerten Verstärkungsfasern, z.B. in Form von Fasermatten, Fasergelegen und Fasergeweben, sind bekannt. Bei Verwendung von Verstärkungsgeweben erhält man besonders biegesteife Verbundwerkstoffe, die jedoch umso teurer werden, je höher das Flächengewicht der eingesetzten Glasfasergewebe ist. Für den Einsatz im Automobilbau, insbesondere zur Herstellung spezieller Karosserieteile werden - in Konkurrenz zu Aluminium - Verbundwerkstoffe benötigt, die billig sind, eine hohe Biegesteifigkeit aufweisen und ein niedriges Flächengewicht haben.

Der Erfindung lag also die Aufgabe zugrunde, derartige Verbundwerkstoffe auf Basis von glasfaserverstärkten Thermoplasten zu entwickeln.

Es wurde gefunden, daß diese Aufgabe gelöst wird durch Verbundwerkstoffe mit Sandwichstruktur, welche Deckschichten mit Glasfasergeweben aufweisen.

Gegenstand der Erfindung ist demzufolge ein biegesteifer, flächiger Faserverbundwerkstoff mit einer Dicke von 1,2 bis 3 mm, bestehend aus einer Thermoplastmatrix und Verstärkungsfasern, mit folgenden Schichtaufbau:
A) zwei Deckschichten aus Glasfasergewebe mit einem Flächengewicht von jeweils 60 bis 800 g·m⁻², eingebettet in eine Thermoplastmatrix, wobei der Glasfasergehalt 20 bis 60 Gew.-% beträgt,
B) eine Kernschicht aus Thermoplastmatrix, die gegebenenfalls bis zu 50 Gew.-% Glasfasern mit ungerichteter Faserorientierung enthalten kann.

Der Faserverbundwerkstoff ist dadurch gekennzeichnet, daß die Glasfasern der Kernschicht in Form von zwei übereinander angeordneten Fasermatten vorliegen, und daß die Glasfasergewebe der Deckschichten jeweils mit den benachbarten Glasfasermatten der Kernschicht vernadelt sind, wobei das Gewichtsverhältnis Fasermatten zu Fasergewebe zwischen 1:0,2 und 1:18 liegt.

In der DE-A 35 35 272 ist die Verwendung genadelter Gewebe oder Gelege als textile Flächengebilde für die Herstellung von thermoplastisch verformbarem Halbzeug beschrieben. Durch die Nadelung wird die Durchtränkung der eng aneinander anliegenden unidirektional orientierten Faserbündeln mit der Thermoplast-Schmelze ermöglicht. In einer besonderen Ausführungsform (Beispiel 1) werden zwei genadelte Glasfasergewebe mit sehr hohem Flächengewicht (560 g·m⁻²) zwischen drei Schmelzeschichten aus Polypropylen geführt, mit der Thermoplastschmelze getränkt und verpreßt. Das entstandene Halbzeug mit 2,7 mm dick, sein Flächengewicht beträgt 3400 g·m⁻². Es ist somit für den Einsatz im Karosseriebau zu schwer. Es enthält zwar zwei Schichten aus Glasfasergewebe, die in eine Thermoplastmatrix eingebettet sind, jedoch keine Kernschicht im Sinne der vorliegenden Erfindung.

Die EP-A 323 571 (D1) beschreibt Faserverbundwerkstoffe aus einer Thermoplastmatrix und einem durch Nadelung fixierten textilen Flächengebilde. Dieses Flächengebilde besteht aus mindestens zwei Schichten A aus Glasfasergewebe und mindestens einer Schicht B aus nicht orientierten Glasfasern. Im einfachsten Fall hat das textile Flächengebilde also die Struktur A-B-A. Ein solcher Faserverbund könnte dadurch getränkt werden, daß Thermoplast-Schmelzströme an die Außenseiten geführt werden und dann verpreßt wird. In der Praxis ist das aber nur sehr schwierig durchzuführen, da die verhältnismäßig dichten Gewebeschichten A nur in ungenügendem Maß von der Thermoplastschmelze durchdrungen werden. Der bevorzugte Schichtaufbau hat die Struktur A-B-A-B. Eine Struktur A-B B-A ist aber weder offenbart noch angedeutet.

Die DE-A 29 48 235 beschreibt ein Verfahren zur Herstellung eines Faserverbundwerkstoffes, bei dem - vorzugsweise vernadelte - Glasfasermatten mit einer Thermoplast-Schmelze getränkt werden. In einer bevorzugten Ausführungsform wird ein Thermoplast-Schmelzestrom zwischen zwei Glasmatten und an deren Außenseiten Thermoplastfolien geführt und verpreßt. Glasfasergewebe oder gar ein Schichtenaufbau aus Fasermatten und Fasergewebe ist nicht beschrieben.

Der erfindungsgemäße Verbundwerkstoff hat eine Dicke von 1,2 bis 3, vorzugsweise von 1,5 bis 2,5 mm und ein Flächengewicht von vorzugsweise von 1000 bis 3200 g·m⁻². Er besteht aus einer Thermoplastmatrix und Verstärkungsfasern. Als Thermoplaste kommen grundsätzlich alle bei erhöhter Temperatur schmelzbaren Kunststoffe in Frage. Bevorzugt sind Polyamide und Polyester, insbesondere Polyamid 6, Polyamid 6,6, Polyethylenterephthalat und Polybutylenterephthalat. Diese weisen gegenüber dem in DE-A 35 35 272 und EP-A 323 571 bevorzugten Polypropylen nicht nur eine erhöhte Wärmeformbeständigkeit auf, sondern ergeben auch Verbundwerkstoffe mit höherer Steifigkeit. Polypropylen ist jedoch grundsätzlich auch geeignet.

Die Verbundwerkstoffe haben Sandwichstruktur mit zwei Deckschichten A und einer Kernschicht B. Die Deckschichten sind bevorzugt gleich dick; die Dicke der Kernschicht beträgt vorzugsweise 0,3 bis 2,5 mm, insbesondere 0,5 bis 1,5 mm..

Die Deckschichten enthalten erfindungsgemäß ein Glasfasergewebe mit einem Flächengewicht von 60 bis 800, vorzugsweise 120 bis 500 g·m⁻², welches in eine Thermoplastmatrix eingebettet ist. Der Glasfasergehalt der Deckschichten beträgt 20 bis 60, vorzugsweise 30 bis 50 Gew.-%. Es sind übliche Gewebe verwendbar, bei denen Endlosfasern in zwei oder mehr Vorzugsrichtungen orientiert sind.

Die Kernschicht dient im wesentlichen als billiger Abstandshalter zwischen den teuren Deckschichten sowie zur Erhöhung der Schubfestigkeit. Im einfachsten Fall besteht sie aus unverstärkten Thermoplasten, der aber mit dem Thermoplasten der Deckschichten verträglich sein muß, damit eine gute Haftung der Schichten gegeben ist. Bevorzugt sind die Thermoplasten in Deckschichten und Kernschicht die gleichen Kunststoffe. Der Thermoplast kann auch in geschäumter Form vorliegen oder kurzfaserverstärkt sein, wobei der Fasergehalt bis zu 50 Gew.-% betragen kann und die Faserlänge zwischen 0,01 und 3 mm beträgt. Diese Ausführungsform des erfindungsgemäßen Verbundwerkstoffs kann z.B. hergestellt werden durch Extrusion einer (gegebenenfalls Treibmittel oder Glasfasern enthaltenden) Thermoplastschmelze zwischen zwei Glasfasergeweben und Verpressen des Verbunds auf einer Doppelbandpresse.

Die Kernschicht enthält zwei Fasermatten, die übereinander angeordnet sind, wobei jeweils eine Fasermatte mit dem benachbarten Glasfasergewebe der Deckschicht vernadelt ist. Das Gewichtsverhältnis von Fasermatten zu Fasergewebe im Verbundwerkstoff beträgt dabei 1:0,2 bis 1:18, vorzugsweise 1:0,25 bis 1:1 .

Dieser bevorzugte Faserverbundwerkstoff wird beispielsweise hergestellt, indem man
a) auf ein Glasfasergewebe eine Wirrfaserschicht auflegt und beides miteinander vernadelt,
b) zwei solcher Faserverbunde derart zusammenführt, daß die Gewebe nach außen zu liegen kommen,
c) je einen Thermoplast-Schmelzestrom zwischen die beiden Faserverbunde sowie an deren Außenseiten führt,
d) Thermoplastschmelze und Faserverbunde so miteinander verpreßt, daß die Fasern vollständig mit der Schmelze durchtränkt werden, und
e) den Verbund abkühlt und verfestigt.

Das Aufbringen der Wirrfaserschicht in Schritt a) kann entweder durch Aufstreuen von Schnittglasfasern einer Länge von 25 bis 100 mm auf das Gewebe oder durch kräuselndes Ablegen von Endlosfasern auf dem Gewebe geschehen. Das Vernadeln kann auf üblichen Nadelstühlen mit üblichen Filznadeln vorgenommen werden. Die Einstichzahl kann in weiten Grenzen zwischen 10 und 200 Einstichen pro cm² schwanken, bevorzugt liegt sie zwischen 20 und 100. Durch die Nadelung werden die Deckschichten mit der Kernschicht verbunden, so daß ein integerer Verbund entsteht. Außerdem werden durch die Nadelung einige Glasfasern, insbesondere auch in dem Fasergewebe gebrochen, und Glasfaserbündel werden zerteilt, was die Tränkung mit der Thermoplastschmelze erheblich erleichtert.

Die Thermoplast-Schmelzeströme im Schritt c) können durch einen Extruder mit drei parallelen Breitschlitzdüsen erzeugt werden. Grundsätzlich ist es auch möglich, statt der beiden äußeren Schmelzeströme Thermoplastfolien zuzuführen, die dann im Schritt d) aufgeschmolzen werden.

Das Verpressen, Tränken und Verfestigen der Schritte e) und f) wird vorzugsweise auf einer Doppelbandpresse - wie z.B. in DE-B 29 48 235 beschrieben - durchgeführt.

Die erfindungsgemäßen Faserverbundwerkstoffe können durch Pressen und Stanzen thermoplastisch verformt und zu Automobilteilen, z.B. Bodenblechen, Heckklappen oder Motorhauben verarbeitet werden.

Die im Beispiel genannten Teile und Prozente beziehen sich auf das Gewicht.

### Beispiel

Auf einer Nadelanlage wurde auf einem durch Leinwandbindung gebundenen Gewebe mit einem Flächengewicht von 510 g·m⁻² Schnittfasern mit einem Flächengewicht von 150 g/m² abgelegt und gemeinsam zu einem integeren Verbund vernadelt. Zwei dieser Verbunde wurden gemeinsam mit drei Schmelzefilmen aus Polyamid 6 sowie Stabilisierungs- und Nukleierungsmittel derart einer Doppelbandpresse zugeführt, daß die Gewebeschichten nach außen und die Wirrfaserschicht nach innen orientiert waren. Der Kunststoff penetrierte die Glasverbundschichten in der Heizpreßzone der Doppelbandpresse, und die flächige Bahn wurde in der Kühlpreßzone der Doppelbandpresse auf ca. 70°C abgekühlt. Die so gefertigte Sandwichstruktur hatte eine Dicke von 1,8 mm und ein Flächengewicht von 1400 g·m⁻², Aus ihr wurden Proben für den Biegeversuch nach DIN EN 63 entnommen und der Biegeelastizitäsmodul bestimmt. Er betrug 12300 MPa.

## Patentansprüche

1. Biegesteifer, flächiger Faserverbundwerkstoff einer Dicke von 1,2 bis 3 mm, bestehend aus einer Thermoplastmatrix und Verstärkungsfasern, mit folgendem Schichtaufbau:
A) zwei Deckschichten aus Glasfasergewebe mit einem Flächengewicht von jeweils 60 bis 800 g·m⁻², eingebettet in eine Thermoplastmatrix, wobei der Glasfasergehalt 20 bis 60 Gew.-% beträgt,
B) eine Kernschicht aus Thermoplastmatrix, die bis zu 50 Gew.-% Glasfasern mit ungerichteter Faserorientierung enthält,
dadurch gekennzeichnet, daß die Glasfasern der Kernschicht in Form von zwei übereinander angeordneten Fasermatten vorliegen, und daß die Glasfasergewebe der Deckschichten jeweils mit den benachbarten Glasfasermatten der Kernschicht vernadelt sind, wobei das Gewichtsverhältnis Fasermatten zu Fasergewebe zwischen 1:0,2 und 1:18 liegt.

2. Faserverbundwerkstoff nach Anspruch 1, dadurch gekennzeichnet, daß der Thermoplast ein Polyamid oder ein gesättigter Polyester ist.

3. Verfahren zur Herstellung des Faserverbundwerkstoffs nach Anspruch 1, wobei man
a) auf ein Glasfasergewebe eine Wirrfaserschicht auflegt und beides miteinander vernadelt,
b) zwei solcher Faserverbunde derart zusammenführt, daß die Gewebe nach außen zu liegen kommen,
c) je einen Thermoplast-Schmelzestrom zwischen die beiden Faserverbunde sowie an deren Außenseiten führt,
d) Thermoplastschmelze und Faserverbunde so miteinander verpreßt, daß die Fasern vollständig mit der Schmelze durchtränkt werden, und
e) den Verbund abkühlt und verfestigt.

## Claims

1. A rigid sheetlike fiber composite from 1.2 to 3 mm in thickness, comprising a thermoplastic matrix and reinforcing fibers and having the following layered construction:
A) two outer layers of woven glass fiber fabric each having a basis weight of from 60 to 800 g·m⁻² embedded in a thermoplastic matrix, the glass fiber content being within the range from 20 to 60% by weight,
B) a core layer of thermoplastic matrix including up to 50% by weight of glass fibers in random orientation,
characterized in that the glass fibers of the core layer are present in the form of two superposed fiber mats and in that the woven glass fiber fabrics of the outer layers are each needled together with the adjacent glass fiber mats of the core layer, the weight ratio of fiber mat to woven fiber being between 1:0.2 and 1:18.

2. A fiber composite as claimed in claim 1, characterized in that the thermoplastic is a polyamide or a saturated polyester.

3. A process for producing the fiber composite of claim 1, which comprises
a) placing a random fiber layer on a woven glass fiber fabric and needling the two together,
b) bringing two such fiber composita together with the wovens on the outside,
c) directing a molten stream of thermoplastic each in between the two fiber composita and onto their outer surfaces,
d) pressing the molten thermoplastic and fiber composita together in such a way that the fibers become completely saturated with the melt, and
e) cooling and consolidating the composite.

## Revendications

1. Matériau composite plat renforcé par des fibres, résistant à la flexion, possédant une épaisseur de 1,2 à 3 mm, constitué par une matrice thermoplastique et par des fibres de renforcement, possédant la structure de couches ci-après:
A) deux couches de recouvrement constituées d'un tissu de fibres de verre possédant un poids surfacique de respectivement 60 à 800 g·m⁻², enrobé dans une matrice thermoplastique, la teneur en fibres de verre s'élevant de 20 à 60 pour cent en poids,
B) une couche centrale constituée d'une matrice thermoplastique qui contient des fibres de verre jusqu'à concurrence de 50% en poids, dont l'orientation est non dirigée,
caractérisé en ce que les fibres de verre de la couche centrale sont présentes sous la forme de deux mats de fibres superposés, et en ce que les tissus de fibres de verre des couches de recouvrement sont aiguilletés respectivement avec les mats de fibres de verre voisins de la couche centrale, le rapport pondéral des mats de fibres au tissu de fibres s'élève entre 1:0,2 et 1:18.

2. Matériau composite renforcé par des fibres selon la revendication 1, caractérisé en ce que la matière thermoplastique est un polyamide ou un polyester saturé.

3. Procédé pour la fabrication du matériau composite renforcé par des fibres selon la revendication 1, dans lequel
a) on dépose sur un tissu de fibres de verre, une couche de fibres embrouillées et on les relie l'une à l'autre par aiguilletage,
b) on réunit deux composites de ce type renforcés par des fibres de telle sorte que les tissus soient orientés vers l'extérieur,
c) on guide respectivement un courant d'une matière thermoplastique en fusion entre les deux composites renforcés par des fibres, ainsi que sur leurs côtés externes,
d) on comprime les uns avec les autres les matières thermoplastiques en fusion et les composites renforcés par des fibres de telle sorte que les fibres sont complètement imprégnées avec la masse fondue, et
e) on refroidit et on consolide le composite.
